# EUROPEAN PATENT APPLICATION

(11) **EP 2 892 128 A2**
(43) Date of publication of application: **08.07.2015**
(21) Application number: 14196963.4
(22) Date of filing: 09.12.2014
(51) Int. Cl.: H02K 1/27

(54) **Rotor and motor including the same**

(30) Priority: 09.12.2013 KR 20130152228
(71) Applicant: LG Innotek Co., Ltd., Seoul 100-714 (KR)
(72) Inventor:
(74) Representative: Zardi, Marco

(57) **Abstract**

The present invention discloses a rotor including a non-magnetic member including a through hole in which a rotational shaft is inserted; a plurality of core members received in the non-magnetic member and arranged radially with respect to the through hole to form pockets; and a plurality of magnets inserted in the pockets, wherein an outer circumferential surface of the magnet is covered with the non-magnetic member. Also, the present invention discloses a motor including the above rotor.

## Description

### CROSS-REFERENCE TO RELATED APPLICATION

This application claims priority to and the benefit of Korean Patent Application No. 2013-0152228, filed on December 09, 2013, the disclosure of which is incorporated herein by reference in its entirety.

### BACKGROUND

### 1. Field of the Invention

The present invention relates to a rotor mounted to a motor.

### 2. Discussion of Related Art

In a general motor, a rotor is rotated by electromagnetic interaction between the rotor and a stator. At this time, a rotational shaft inserted in the rotor is also rotated to generate a rotational driving force.

The rotor consists of a rotor core and a magnet. Depending on a coupling structure of the magnet provided on a rotor core, the rotor is classified into an SPM type rotor in which a magnet is placed on a rotor surface and an interior permanent magnet (IPM) type rotor.

In the above kinds of rotors, the IPM type rotor includes a cylindrical hub in which a rotational shaft is inserted, core members which are radially coupled to the hub, and a magnet inserted between the core members.

In an assembling process, however, when the core member is forcedly press-fitted in the hub, the core member may be damaged. In addition, since the hub, the core members, and the magnet are manually assembled, the concentricity is not maintained, and the manufacturing cost is increased due to a number of elements to be assembled.

### SUMMARY OF THE INVENTION

An object of the present invention is to provide a rotor which can be produced by a simple assembling process, and a motor including the same.

In addition, the present invention provides a rotor in which a separation of a magnet is prevented, and a motor including the same.

A rotor according to one embodiment of the present invention includes a cylindrical non-magnetic member including a through hole in which a rotational shaft is inserted; a plurality of core members received in the non-magnetic member and arranged radially with respect to the through hole to form pockets; and a plurality of magnets inserted in the pockets. Here, an outer circumferential surface of the magnet is covered with the non-magnetic member.

In the rotor according to a preferred embodiment of the present invention, an outer circumferential surface of the core member may be exposed to an outside of the non-magnetic member.

In the rotor according to a preferred embodiment of the present invention, the core member includes engagement protrusions protruded in the directions which are opposite to each other, and the outer circumferential surface of the core member, which is exposed between the engagement protrusions of two adjacent core members, is covered with the non-magnetic member.

In the rotor according to a preferred embodiment of the present invention, the outer circumferential surface of the core member may have a curvature which is the same as the curvature of the outer circumferential surface of the cylindrical non-magnetic member.

In the rotor according to a preferred embodiment of the present invention, the non-magnetic member includes a central part having a through hole in which the rotational shaft is inserted, a lateral part covering an outer circumferential surface of the magnet, and a connecting part connecting the central part and the lateral part to each other.

In the rotor according to a preferred embodiment of the present invention, the connecting part is formed on at least one of one surface and the other surface of the rotor to connect the central part and the connecting part.

In the rotor according to a preferred embodiment of the present invention, the central part includes a plurality of insertion grooves formed on an outer circumferential surface thereof, and each of the insertion groove is coupled with an end portion of the core member.

In the rotor according to a preferred embodiment of the present invention, the insertion groove is extended in the axial direction, and a plurality of insertion grooves are formed along an outer circumferential surface of the central part.

In the rotor according to a preferred embodiment of the present invention, the insertion groove may have a width which is increased towards an inside of the central part.

In the rotor according to a preferred embodiment of the present invention, the magnet may have a width which is reduced towards the through hole from a point corresponding to an imaginary line which has a curvature/diameter larger than that of the through hole.

In the rotor according to a preferred embodiment of the present invention, the non-magnetic member may be injection-molded integrally with the core member and the magnet.

In the rotor according to a preferred embodiment of the present invention, the through hole includes a planation surface formed on an inner wall thereof.

A motor according to a preferred embodiment of the present invention includes a housing; a stator disposed in the housing; a rotor which is rotatably disposed in the stator; and a rotational shaft which is rotated integrally with the rotor. Here, the rotor includes a non-magnetic member having a through hole in which a rotational shaft is inserted; a plurality of core members received in the non-magnetic member and arranged radially with respect to the through hole to form pockets; and a plurality of magnets inserted in the pockets. In addition, an outer circumferential surface of the magnet is covered with the non-magnetic member.

### BRIEF DESCRIPTION OF THE DRAWINGS

The above and other objects, features, and advantages of the present invention will become more apparent to those of ordinary skill in the art by describing in detail exemplary embodiments thereof with reference to the accompanying drawings, in which:
FIG. 1 is a conceptual view of a motor according to one embodiment of the present invention;
FIG. 2 is a perspective view of a rotor according to one embodiment of the present invention;
FIG. 3 is a partial plan view of a rotor according to one embodiment of the present invention;
FIG. 4 is a perspective view showing a state where a rotor according to one embodiment of the present invention is coupled to a rotational shaft;
FIG. 5 is a perspective view showing a state where a rotor according to one embodiment of the present invention is coupled to a rotational shaft, and viewed in another direction; and
FIG. 6 is a conceptual view illustrating an injection-molded state of a non-magnetic member according to one embodiment of the present invention.

### DETAILED DESCRIPTION OF EXEMPLARY EMBODIMENTS

Exemplary embodiments of the present invention will be described in detail below with reference to the accompanying drawings. While the present invention is shown and described in connection with exemplary embodiments thereof, it will be apparent to those skilled in the art that various modifications can be made without departing from the spirit and scope of the invention.

Since the present invention may be modified in various ways and may have various embodiments, specific embodiments are illustrated in the drawings and are described in detail in the present specification.

However, it should be understood that the present invention is not limited to specifically disclosed embodiments, but includes all modifications, equivalents, and substitutes encompassed within the spirit and technical scope of the present invention.

It should be understood that the terms such as "comprises" or "has" in this specification are intended to specify a feature, a numeral, a step, an operation, a structural element, a part, or a combination thereof indicated in the specification, but do not exclude one or more features, numerals, steps, operations, structural elements, parts, or a combination thereof or an additional possibilities.

In addition, it should be understood that, in the accompanying drawing, the element(s) is/are shown in a magnified or demagnified form.

Hereinafter, a preferred embodiment of the present invention is illustrated in detail with reference to the accompanying drawings. Here, the same or corresponding structural elements are indicated by the same reference numerals, and a duplicated explanation will be omitted.

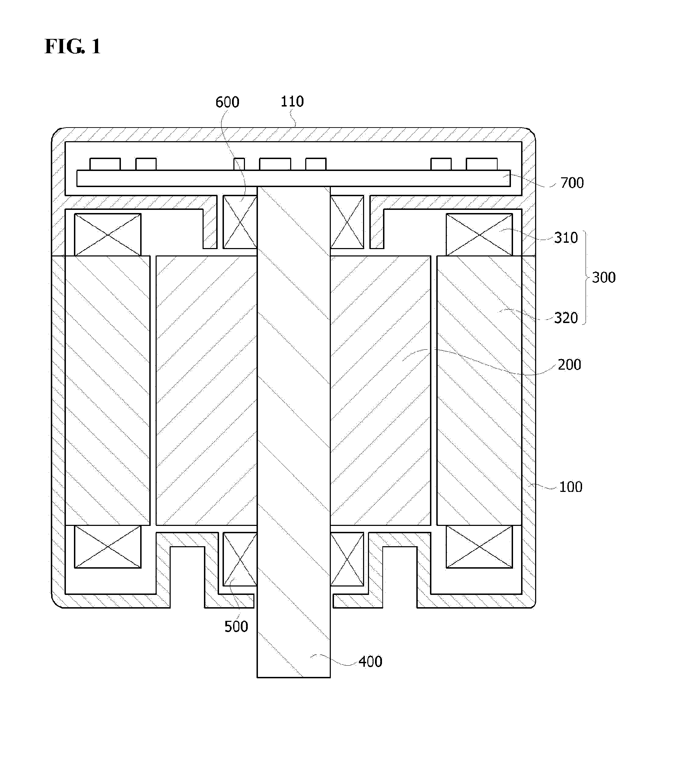

FIG. 1 is a conceptual view of a motor according to one embodiment of the present invention.

Referring to FIG. 1, a motor according to one embodiment of the present invention includes a housing 100, a stator 300 disposed in the housing 100, a rotor 200 which is rotatably disposed in the stator 300, and a rotational shaft 400 passing through and inserted in the rotor 200 to allow the rotor and the rotational shaft to be integrally rotated.

The housing 100 has a cylindrical shape and is provided with a space formed therein so that the stator 300 and the rotor 200 can be mounted in the space. At this time, a shape or material for the housing 100 may be variously changed. However, a metal material which can withstand a high temperature may be selected for the housing 100.

The housing 100 is coupled to a cover 110 to shield the stator 300 and the rotor 200 from the outside. In addition, the housing 100 may further include a cooling structure (not shown) for easily discharging internal heat. An air-cooling type cooling structure or a water-cooling type cooling structure may be selected and employed as such a cooling structure, and the shape of the housing 100 may be properly modified depending on the cooling structure.

The stator 300 is inserted into an internal space of the housing 100. The stator 300 includes a stator core 320 and a coil 310 wound around the stator core 320. An integral-type core formed in a ring shape or a core formed by coupling a plurality of split cores to each other may be employed as the stator core 320.

According to the type of the motor, the stator may be appropriately modified. In the DC motor, for example, the coil may be wound around the integral-type stator core. Also, the three-phase AC motor may be manufactured such that U, V, and W phases are applied to a plurality of coils, respectively.

The rotor 200 is disposed in the stator 300. A magnet is mounted to the rotor 200 so that the rotor is rotated due to an electromagnetic interaction between the rotor 200 and the stator 300.

The rotational shaft 400 is coupled to a central portion of the rotor 200. In a case where the rotor 200 is thus rotated, the rotational shaft 400 is rotated together with the rotor. At this time, the rotational shaft 400 is supported by a first bearing 500 provided at one side thereof and a second bearing 600 provided at the other side.

A plurality of electronic components are mounted on a circuit board 700. As one example, a hole integrated circuit (not shown) detecting a rotation of the rotor 200 or an inverter may be mounted to the circuit board 700.

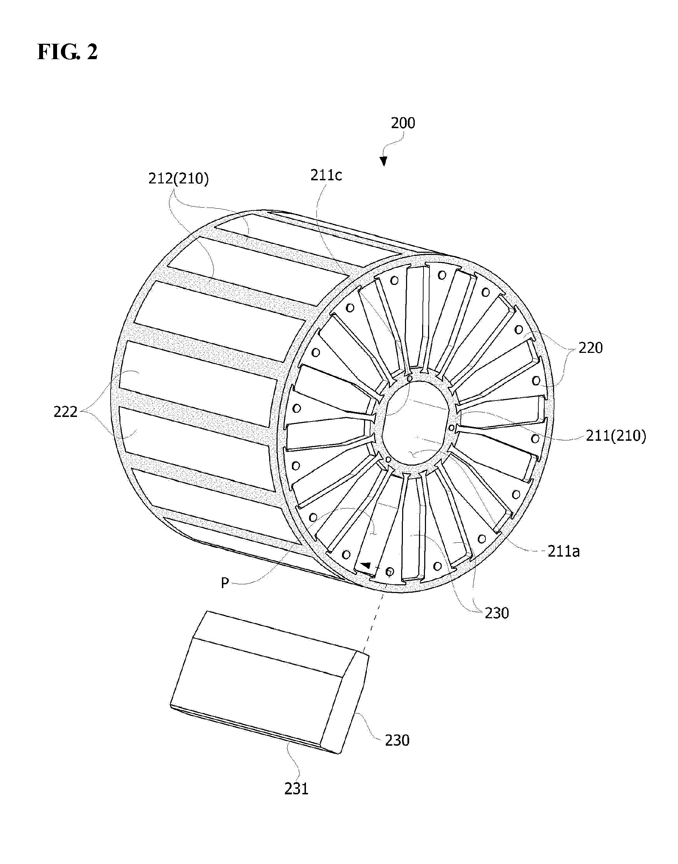

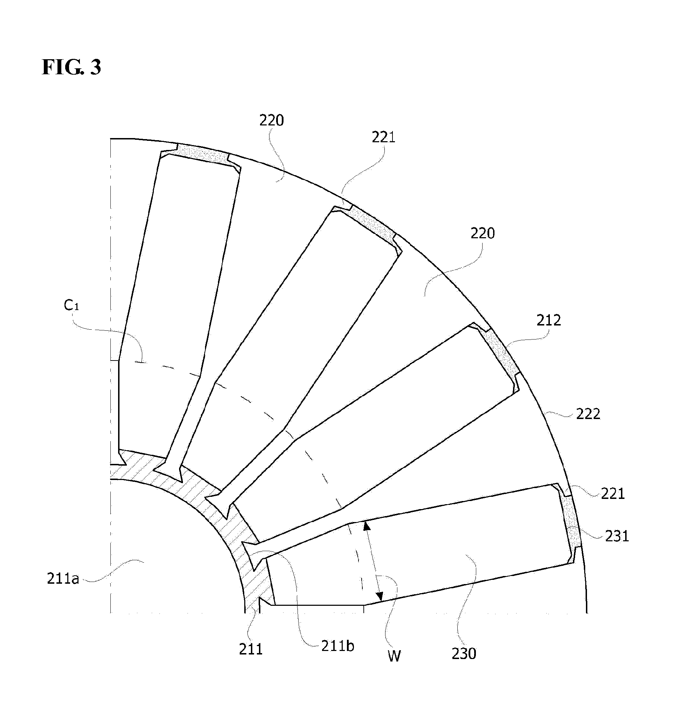

FIG. 2 is a perspective view of the rotor according to one embodiment of the present invention, and FIG. 3 is a partial plan view of the rotor according to one embodiment of the present invention.

Referring to FIG. 2 and FIG. 3, the rotor 200 includes a cylindrical non-magnetic member 210, a plurality of core members 220 which are radially disposed to form pockets P, and a plurality of magnets 230 inserted in the pockets P, respectively.

If the non-magnetic member 210 has a configuration by which the core member 220 and the magnet 230 can be secured, there is no particular limitation to the non-magnetic member. For example, in a state where the core members 220 are radially disposed in a mold, an injection molding process can be performed to manufacture the non-magnetic member 210. The magnet 230 is then inserted in the pocket P.

As another example, the non-magnetic member 210 may be formed by integrally injection-molding the non-magnetic member 210, the core member 220, and the magnet 230. As still another example, after the cylindrical non-magnetic member 210 on which a plurality of insertion holes are formed is pre-manufactured, the core members 220 and the magnets 230 may be inserted in the non-magnetic member, respectively.

If a material can shield magnetic force, any material can be employed for forming the non-magnetic member 210 without any limitation. In this embodiment, the non-magnetic member formed of resin is illustrated.

More concretely, the non-magnetic member 210 includes a central part 211 including a through hole 211 a in which the rotational shaft 400 is inserted, a lateral part 212 covering an outer circumferential surface of the magnet 230 and a connecting part 213 connecting the central part 211 and the lateral part 212 to each other.

The through hole 211a in which the rotational shaft 400 is inserted is formed in the central part 211. A planation surface 211c may be formed on an inner wall of the through hole 211a or the through hole may have an elongated-hole shape. According to this configuration, the rotor of the present invention is advantageous in that a slip of the rotational shaft 400 can be prevented.

An outer circumferential surface of the central part 211 is in contact with an inner end portion of the magnet 230 to secure the magnet 230 and to prevent the magnetic force from leaking to an outside through the through hole 211a. In addition, the outer circumferential surface of the central part 211 has a plurality of insertion grooves 211b formed thereon, and an end portion of the core member 220 is coupled to the insertion groove. The insertion groove 211b is extended in the axial direction.

Accordingly, since the core member 220 is securely fixed to the non-magnetic member 210, a problem that the magnet 230 is separated from the core member 220 even when the motor is driven at high speed is prevented. The insertion groove 211b may be formed such that a width is increased towards the through hole 211a (taper shape) to increase a coupling force between the core member 220 and the central part 211.

The lateral part 212 is formed such that an outer circumferential surface 222 of the core member 220 is exposed to an outside and an outer circumferential surface 231 of the magnet 230 is covered with the lateral part. Thus, a problem that the magnet 230 is separated from the pocket P is prevented. According to the manufacturing method, the lateral part 212 may be adhered to the outer circumferential surface 231 of the magnet 230.

The core members 220 are disposed in the non-magnetic member 210 and are radially arranged with respect to the through hole 211a. The pocket P may be defined as a space formed by the central part 211 and lateral part 212 of the non-magnetic member and the adjacent the core member 220.

The core member 220 is formed of a metal material and forms a magnetic flux path between the magnets 230. An inner end portion of the core member 220 is secured to the insertion groove 211b of the central part 211 and the outer circumferential surface 222 is exposed to an outside of the non-magnetic member 210. At this time, the exposed outer circumferential surface 222 has a curvature which is substantially the same as a curvature of an outer circumferential surface of the non-magnetic member 210.

The core member 220 may have engagement protrusions 221 formed on the outer circumferential surface 222 thereof and extended in the directions which are opposite to each other, respectively. Here, the magnet 230 is engaged to these engagement protrusions. The engagement protrusions 221 restrict the magnet 230 to prevent a separation of the magnet at the time of operating the motor.

The magnets 230 may be disposed into a concentrated flux type spoke formation. More concretely, the magnets 230 are magnetized in the circumferential direction and are disposed such that a polarity of one magnet faces the same polarity of the adjacent magnet. The magnet 230 may be formed such that a width W of the magnet is reduced towards the through hole 211 a from a point corresponding to an imaginary line C1 which has a curvature/diameter larger than that of the through hole 211a.

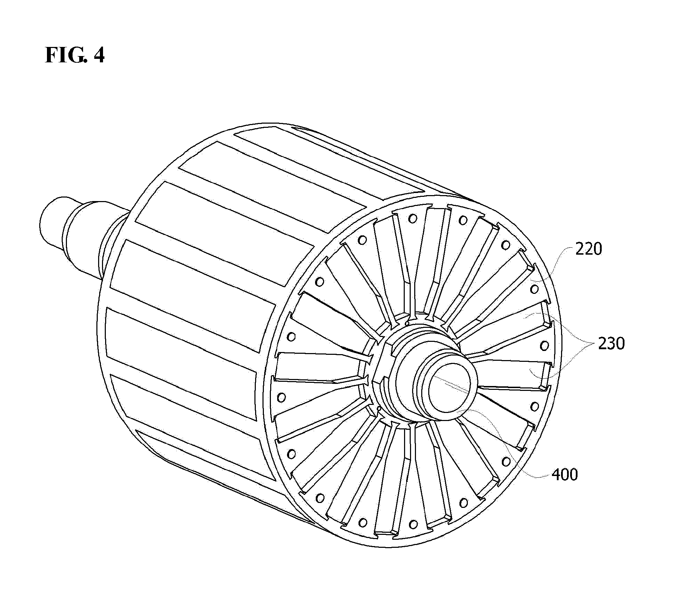

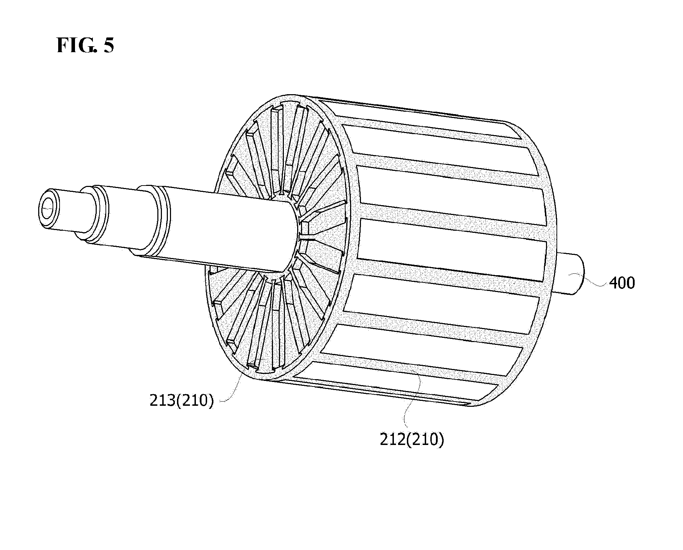

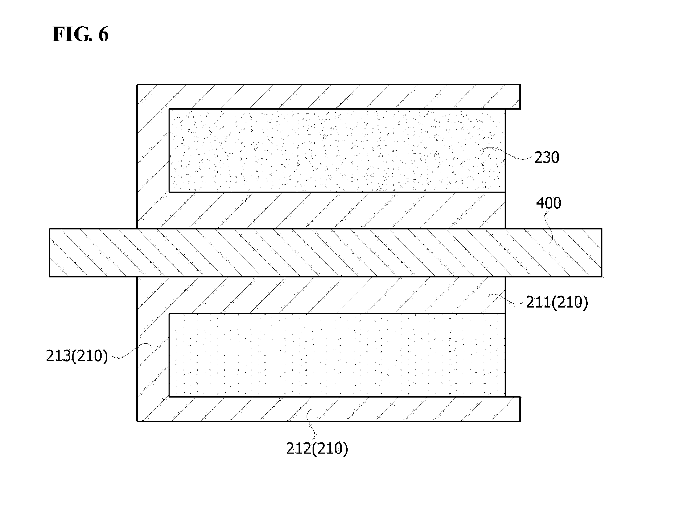

FIG. 4 is a perspective view showing a state where the rotor according to one embodiment of the present invention is coupled to the rotational shaft, FIG. 5 is a perspective view showing a state where the rotor according to one embodiment of the present invention is coupled to the rotational shaft, and viewed in another direction, and FIG. 6 is a conceptual view illustrating an injection-molded state of the non-magnetic member according to one embodiment of the present invention.

Referring to FIG. 5 and FIG. 6, the connecting part 213 of the non-magnetic member 210 is formed on an entire lower surface of the rotor 200 to connect the central part 211 and the lateral part 212 to each other. The lower surface on which the connecting part 213 is formed may be the surface facing the direction in which resin is injected at the time of carrying out an injection-molding process. Accordingly, the lower surface may have a shape (for example, a groove) corresponding to a resin nozzle utilized in an injection-molding process.

The magnet 230 and the core member 220 are sealed by the central part 211, the connecting part 213, and the lateral part 212 of the non-magnetic member 210. As required, the connecting part 213 may be also formed on an upper surface of the rotor 200.

According to the above configuration, since the cylindrical non-magnetic member 210 and the core member 220 are formed integrally with each other by an injection-molding process, the assembling process can be easily performed and it is possible to reduce a slip torque.

According to the present invention, since the elements constituting the rotor are assembled integrally with other, dimensional accuracy is enhanced and it is possible to prevent a slip torque from being generated.

In addition, since the elements constituting the rotor are assembled integrally with other, dimensional accuracy is enhanced when the magnet is inserted.

Furthermore, since the magnet is covered with the non-magnetic member, it is possible to prevent the magnet from being separated when the motor is driven at a high speed.

Due to an integral assembling process, it is possible to reduce the manufacturing cost.

It will be apparent to those skilled in the art that various modifications can be made to the above-described exemplary embodiments of the present invention without departing from the spirit or scope of the invention. Thus, it is intended that the present invention covers all such modifications provided they come within the scope of the appended claims and their equivalents.

## Claims

1. A rotor, comprising:
a non-magnetic member (210) including a through hole (211a) in which a rotational shaft (400) is inserted;
a plurality of core members (220) disposed in the non-magnetic member (210) and arranged radially with respect to the through hole (211 a) to form pockets (P); and
a plurality of magnets (230) inserted in the pockets (P).

2. The rotor of claim 1, wherein an outer circumferential surface (222) of the magnet (230) is covered with the non-magnetic member (210).

3. The rotor of claim 1, wherein an outer circumferential surface (222) of the core member (220) is exposed to an outside of the non-magnetic member (210).

4. The rotor of claim 1, wherein the core member (220) comprises engagement protrusions (221) protruded in the directions which are opposite to each other, and the outer circumferential surface (222) of the core member (220), which is exposed between the engagement protrusions (221) of two adjacent core members (220), is covered with the non-magnetic member (210).

5. The rotor of claim 3, wherein the outer circumferential surface (222) of the core member (220) has a curvature which is the same as the curvature of the outer circumferential surface of the non-magnetic member (210).

6. The rotor of claim 1, wherein the non-magnetic member (210) comprises a central part (211) including a through hole (211a) in which the rotational shaft (400) is inserted, a lateral part (212) covering an outer circumferential surface (222) of the magnet, and a connecting part (213) connecting the central part (211) and the lateral part (212) to each other.

7. The rotor of claim 6, wherein the connecting part (213) is formed on at least one of one surface and the other surface of the rotor (200) to connect the central part (211) and the connecting part (213).

8. The rotor of claim 6, wherein the central part (211) comprises a plurality of insertion grooves (211b) formed on an outer circumferential surface thereof, and each of the insertion groove (211b) is coupled with an end portion of the core member (220).

9. The rotor of claim 8, wherein the insertion groove (211b) is extended in the axial direction, and a plurality of insertion grooves (211b) are formed along an outer circumferential surface of the central part (211).

10. The rotor of claim 8, wherein the insertion groove (211b) has a width which is increased towards an inside of the central part (211).

11. The rotor of claim 1, wherein the magnet (230) has a width which is reduced towards the through hole (211a) from a point corresponding to an imaginary line which has a curvature/diameter larger than that of the through hole (211a).

12. The rotor of claim 1, wherein the non-magnetic member (210) is injection-molded integrally with the core member and the magnet.

13. The rotor of claim 1, wherein the through hole (211a) comprises a planation surface formed on an inner wall thereof.

14. A motor, comprising;
a housing (100);
a stator (300) disposed in the housing (100);
a rotor (200) which is disposed in the stator (300); and
a rotational shaft (400) which is rotated integrally with the rotor (200), wherein the rotor (200) comprises a non-magnetic member (210) including a through hole (211a) in which a rotational shaft (400) is inserted; a plurality of core members (220) disposed in the non-magnetic member (210) and arranged radially with respect to the through hole (211a) to form pockets (P); and a plurality of magnets (230) inserted in the pockets(P).

15. The motor of claim 14, wherein an outer circumferential surface of the magnet (230) is covered with the non-magnetic member (210).
